# EUROPEAN PATENT SPECIFICATION

(11) **EP 2 926 059 B1**
(45) Date of publication and mention of the grant of the patent: **11.11.2020**
(21) Application number: 13762269.2
(22) Date of filing: 05.07.2013
(51) Int. Cl.: F24H 4/02, F24H 8/00, F24H 9/00, F24D 3/18, F24D 19/10

(54) **HEATING APPARATUS COMPRISING A CONDENSING BOILER AND A HEAT PUMP**
HEIZVORRICHTUNG MIT EINEM KONDENSATIONSBOILER UND EINER WÄRMEPUMPE
APPAREIL DE CHAUFFAGE COMPRENANT UNE CHAUDIÈRE À CONDENSATION ET UNE POMPE À CHALEUR

(30) Priority: 30.11.2012 IT BO20120650
(43) Date of publication of application: 07.10.2015
(73) Proprietor: Gas Point S.R.L., 42041 Brescello (IT)
(72) Inventor: LOVASCIO, Nicola, I-42049 Sant'ilario D'Enza (IT); RASTELLI, Raffaello, I-43058 Sorbolo (IT); ZATTI, Claudio, I-43058 Sorbolo (IT)
(74) Representative: Boggio, Luigi
(86) International application number: PCT/IB2013/055523
(87) International publication number: WO 2014/083440

(56) References cited:
- EP-A1- 1 376 025
- EP-A2- 2 336 652
- FR-A1- 2 947 896

## Description

### TECHNICAL FIELD

The present invention concerns a heating apparatus comprising a condensing boiler and a heat pump. In particular, the heat pump can be of the air/water type.

### BACKGROUND ART

Presently known central heating systems employ an air/water heat pump allowing the insertion of a gas condensing boiler for replacing the heat pump as energy source, should the efficiency of the heat pump decrease below the efficiency of the condensing boiler. However, these systems are usually the result of the sum of single devices, such as a condensing boiler and a heat pump, and are managed by an additional regulation and control system which, according to the external environmental conditions and to the average temperature of the heating system, operates the heat pump, or optionally the boiler, in order to guarantee a system efficiency always higher that 85 ÷ 90%, regardless of the external environmental conditions.

Furthermore, technical literature describes systems using at the same time an air/water heat pump and a boiler. These systems employ a single air intake duct for both machines, and a further single evacuation duct for mixed air and exhaust gases; to this regard, see EP-A1-1 376 025 (GASTEC).

FR-A10-2 947 896 describes a heating system having a boiler, which is connected and combined with a heating circuit. A heat pump has a cooling fluid circuit, an evaporator and a condenser. A compressor is formed between the evaporator and the condenser. A pressure regulator is upstream the compressor, in order to regulate the pressure of the cooling fluid to a reference value in the evaporator. Document EP 1376 025 A1 describes a heating apparatus according to the preamble of claim 1.

### DISCLOSURE OF INVENTION

Therefore, it is an object of the present invention to provide a heating apparatus obtained by means of the effective integration of a condensing boiler and of an air/water heat pump, with a single air inlet duct and separate evacuation ducts for the air coming from the heat pump and for the exhaust gases coming from the boiler, which allows to obtain efficiency values higher than those obtainable by synchronously or diachronously using both devices (present state of the art); and which is also installer and user friendly.

Therefore, according to the present invention, a heating apparatus is realized according to what claimed in Claim 1 or in any other Claim directly or indirectly dependent from Claim 1.

The efficiency values indicated in the present description are calculated according to the new trend set by the European Commission, according to which the energy balances for calculating the efficiency of machines producing thermal energy must keep into account: HCV (higher calorific value) of the used fuel; consumption of electric energy used by these machines for producing thermal energy, and consumption of primary energy (the energy obtained from fossil fuels) used for producing electric energy, considering that the European energy system gives a 40% yield (namely, considering that each kWh of produced electric energy requires the use of 2.5 kWh of thermal energy contained in fossil fuels; ratio defined as "conversion coefficient", CC, in Europe).

### BRIEF DESCRIPTION OF THE DRAWINGS

The present invention will be hereinafter described with a reference to the enclosed drawings, illustrating some non-limiting exemplificative embodiments, wherein:
- figure 1 shows a first embodiment of a heating apparatus which is not part of the present invention;
- figure 2 shows a second embodiment of a heating apparatus which is not part of the present invention;
- figure 3 shows, in the form of curves, the efficiency trend of various systems, according to the outside air temperature and to the average water temperature in the system, in the case of a heating system with radiators (high temperature system);
- figure 4 shows, in the form of curves, the efficiency trend of various systems according to the outside air temperature and to the average water temperature in the system, in the case of a floor heating system (low temperature system); and
- figures 5 and 6, respectively, show a third and a fourth embodiment of a heating apparatus according to the present invention.

### BEST MODE FOR CARRYING OUT THE INVENTION

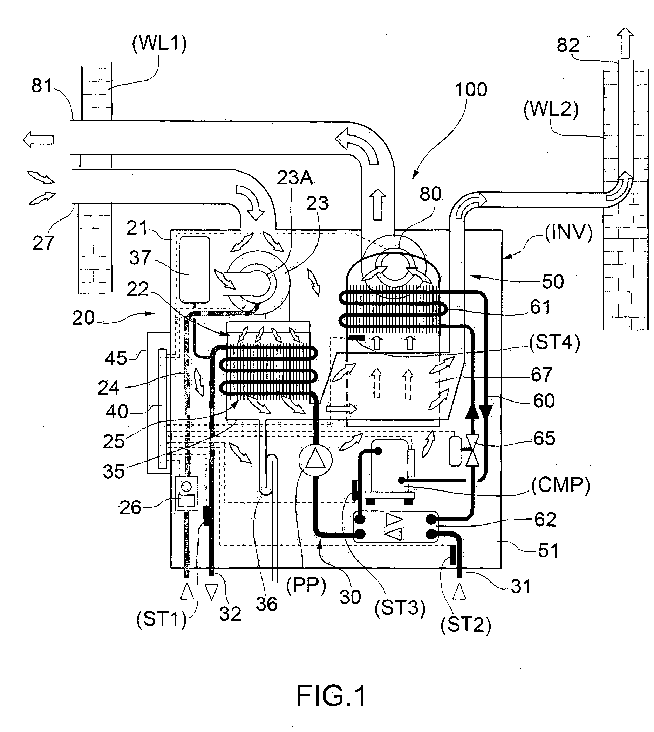

In figures 1, 2, 5 and 6, the reference number 100 indicates a heating apparatus as a whole.

First of all, it must be noticed that the heating system 100 (figure 1) comprises a condensing boiler 20 and a heat pump 50 mutually coupled in order to form a single apparatus. Advantageously, the heat pump 50 is of the air/water type.

The condensing boiler 20 comprises, in turn, a burner 22 (premix type), a fan 23, at least a portion of an inlet duct 24 feeding combustible gas to the burner 22, and a primary heat exchanger 25 crossed by a primary circuit 30 for feeding hot water to the radiators (not shown) of a central heating system. The thermal exchange between the exhaust gases produced by burner 22 and the water of primary heating circuit 30 occurs in the primary heat exchanger 25.

It must be noticed that the primary circuit 30 further provides a water return duct 31 to boiler 20 and a hot water delivery duct 32 to the radiators. The water flows inside primary circuit 30 by means of a pump (PP). On the delivery duct 32 there is a temperature probe (ST1) which allows the measurement of the temperature values reached by the water exiting the apparatus 100.

Moreover, the combustible gas inlet duct 24 is associated to a double shutter gas valve 26 (a security shutter and an operating shutter) which, as later described, allows the gas passage to burner 22 anytime the primary circuit 30 needs heating.

The sealed chamber 21 communicates with the external environment through an air inlet duct 27.

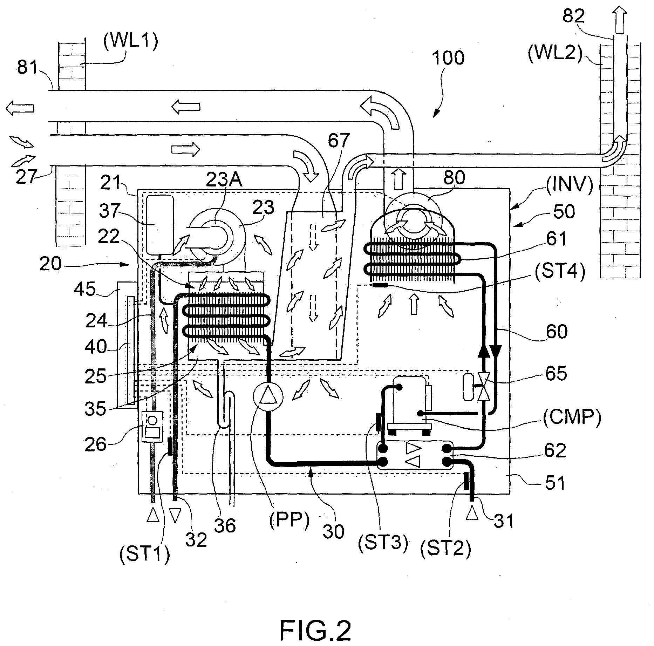

As shown in figures 1 and 2, the combustible gas (e.g. methane), mixed in a mixer 23a with combustion air, reaches a fan 23 which is arranged on a carter 35, which houses the aforesaid primary heat exchanger 25. A siphon 36 for discharging the condensate produced by primary heat exchanger 25 of condensing boiler 20 is housed on the bottom of carter 35.

Inside the sealed chamber 21 there is also an expansion vessel 37 which allows the compensation of thermal expansion of water flowing in primary circuit 30.

Outside the sealed chamber 21 an electronic regulation and control unit 40 has been placed, which allows the system to operate according to the criteria described in the following paragraphs.

Furthermore, there is a control panel 45 (electronic control means 45) which allows the user to switch on and off the whole apparatus 100, as well as to adjust the heating temperature and to control the set parameters by visualizing them.

Ignoring for the moment the presence of the heating pump 50, the operation of the sole condensing boiler 20 is as follows.

Every time boiler 20 is "switched on" (namely, every time its operation is electrically authorized), the pump (PP) is put into operation, the probe (ST1) detects a temperature lower than the one set by the user on the control panel 45, the electronic control unit 40 allows the ignition of burner 22 by operating fan 23 and opening the gas valve 26.

The fan 23 generates a depression in the mixer 23A, said depression determines the opening of the operating shutter of gas valve 26 and the combustible gas passage through the inlet duct 24.

At the same time, the ignition and security system (not shown) verifies the effective ignition of the burner and the presence of a flame, and as a consequence, allows a further opening of gas valve 26.

At this point, the electronic control unit 40 works as a closed-loop feedback control system; this means that, as long as the temperature detected by the probe (ST1) is far away from the set-point value set by the user, fan 23 operates at maximum rpm and gas valve 26 allows the maximum gas flow.

When the set-point temperature value comes closer, the electronic control unit 40 reduces the required power by decreasing the rpm of fan 23 and the gas flow passing through gas valve 26, thus adapting the thermal power delivered by burner 22 for maintaining the temperature of the water exiting the primary circuit 30 at the value set on the control panel 45.

If the thermal energy required by the heating system decreases below the minimum value of power deliverable by boiler 20, the temperature of the water entering boiler 20 from duct 31 progressively increases as well as the temperature of the water in the delivery duct 32.

When the temperature difference between the value detected by the probe (ST1) and the set value exceeds a predetermined value by some degrees Celsius, the electronic control unit 40 determines the closing of gas valve 26 and the stopping of fan 23 with the resulting shutdown of burner 22.

The previously described cycle is repeated after a certain time, as soon as the probe (ST1) detects a temperature lower than the set-point value.

The heat pump 50, in turn, comprises the typical components of an air/water heat pump. Therefore, the heat pump 50 comprises a compressor (CMP) which compresses and increases the temperature of a refrigerant fluid (e.g., R134a - tetrafluoroethane) passing through a circuit 60.

Said circuit 60 passes through a first heat exchanger 61, called "evaporator" 61, wherein the refrigerant fluid evaporates, thus passing from the liquid phase to the gaseous phase. From said evaporator 61 the refrigerant fluid is sent by the compressor (CMP) to a second heat exchanger 62, called "condenser" 62. In the condenser 62 the refrigerant fluid condenses, thus passing from the gaseous phase to the liquid phase, transferring heat to the return water passing in the heating system through the duct 31 (see below).

During the passage through evaporator 61, the outside air undergoes a cooling, often causing the condensation of the moisture it contains.

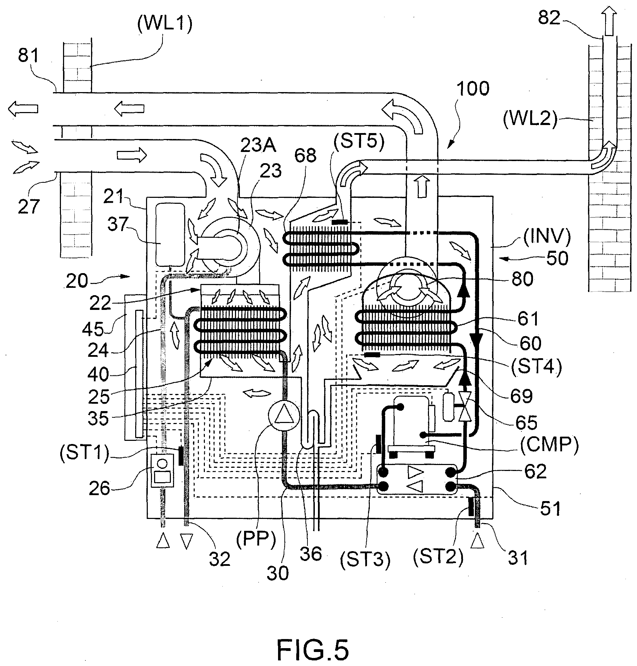

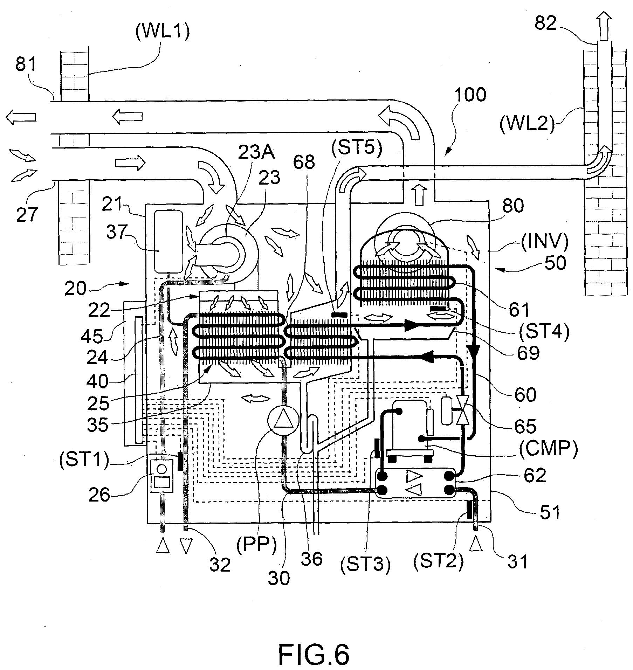

The condensate is collected by means of a condensate collection tank 69 (which can be seen only in the embodiments of figures 5 and 6, but which is also present in the embodiments of figures 1, 2) and sent to an outlet which, for facilitating the machine installation, can be in common with the outlet of siphon 36 (figures 5, 6).

Moreover, in the case of the third and of the fourth embodiment (figures 5, 6), the circuit 60 also passes through a further heat exchanger 68, called "complementary evaporator" 68, wherein the refrigerant fluid completes its evaporation, since it had only partially occurred in the main evaporator 61.

Advantageously, but not necessarily, the sealed chamber 21 is formed by a single-piece housing (INV) containing all elements composing the apparatus 100.

As usual, also a (adiabatic) lamination valve 65 is provided on the circuit 60 of the refrigerant fluid, said valve determining the necessary and sufficient pressure decrease for maintaining the refrigerant fluid pressure in evaporator 61 and in condenser 62 at the wished values.

In the embodiments shown in figures 1 and 2, downstream of the heat exchanger 25, there is a heat exchanger 67 which allows the thermal exchange between the exhaust gases coming from boiler 20 and a portion of the air coming from the air inlet duct 27, in the embodiment illustrated in figure 1, or all the air coming from the air inlet duct 27 in the embodiment illustrated in figure 2.

In other words, the overall air entering the sealed chamber 21 through the single air inlet duct 27 is divided into two flows in the case of figure 1: a first flow enters directly burner 22 and works as comburent gas for the combustion, and a second flow warms by lapping carter 35 and heat exchanger 67 for reaching the evaporator 61; whereas, in the case of figure 2, the overall ambient air warms first in the heat exchanger 67 and is then divided into two flows: a first flows enters burner 22 and a second flow goes directly to evaporator 61.

However, in both cases, all remaining air coming from heat exchanger 67 and from evaporator 61 is then evacuated into the atmosphere by a fan 80 through an evacuation duct 81 whose outlet can be advantageously arranged on the same wall (WL1) supporting the aforesaid ambient air inlet duct 27.

As previously stated, in the embodiments shown in figures 5 and 6, downstream of the heat exchanger 25 there is a complementary heat exchanger 68 which allows a direct thermal exchange between the exhaust gases coming from boiler 20 and the refrigerant fluid coming from the main evaporator 61 in the case of figure 5, or from the lamination valve 65 in the embodiment illustrated in figure 6.

The exhaust gases coming from the heat exchanger 67 or 68 are, on the other hand, evacuated through an evacuation duct 82, propelled by the aforesaid fan 23.

The outlet of the evacuation duct 82 is advantageously arranged on a wall (WL2) which can be separated from the aforesaid wall (WL1). It is thus advantageously obtained an air inlet/outlet area (wall (WL1)), and a separate fume outlet area (wall (WL2)).

The fan 80 determines the air flow coming from the sealed chamber 21 and passing through the heat exchanger 67 and the evaporator 61.

It must be noticed that the same heat exchanger 67 allows at least a portion of the ambient air which entered the sealed chamber 21 to pass directly from the inlet duct 27 to the inlet of the evaporator 61 after warming through the heat exchanger 67 by-passing the primary heat exchanger 25.

All these solutions allow the realization of fume evacuation ducts connected to the evacuation duct 82 having a size far smaller than the one necessary for the supply and the evacuation of the air.

In fact, it is known that for producing the same amount of energy by means of a heat pump, by taking the necessary amount of energy from the ambient air, and by means of a boiler by taking the energy from the exhaust gases, an air volume at least five times larger than the fume volume must pass through the evaporator of the heat pump.

Inside the container 51 the following further temperature probes are provided:
- (ST2): probe for measuring, instant by instant, the water temperature in the duct 31, namely at the inlet in the apparatus 100;
- (ST3): probe for measuring the refrigerant fluid temperature at the outlet of the compressor (CMP) before it enters the condenser 62; and
- (ST4): probe for measuring the air temperature warmed in the exchanger 67, or entering the container 51 in the case of figures 5 and 6, before the heat exchange with the refrigerant fluid occurring in the evaporator 61.

In the case of the embodiments shown in figures 5 and 6, a further probe (ST5) is provided at the outlet of the complementary evaporator 68 for measuring the temperature of the exhaust gases coming from the same evaporator 68.

It must be noticed that, in the case of the embodiments of figures 1 and 2, a heat exchange occurs in the evaporator 61 between the air previously warmed in the exchanger 67 with the evaporating refrigerant fluid, whereas in the condenser 62 it is the cold water of duct 31 which condenses said refrigerant fluid before the expansion occurring in the (adiabatic) lamination valve 65.

In the case of the embodiments of figures 5 and 6, on the other hand, the amount of energy made available by the exhaust gases coming from the exchanger 25 is directly fed to the refrigerant fluid in the complementary evaporator 68 placed in series with respect to the main evaporator 61.

The operation of the whole apparatus 100, object of the present invention, is now described with a reference to two quite different external environmental conditions, in order to better explain the operation criteria.

Said environmental conditions are:
1) temperature of the outside air higher than 5°C; and
2) temperature of the outside air lower than 5°C.

It is known that the efficiency of heat pumps corresponds to the percentage ratio between their COP ("coefficient of performance", namely the ratio between the energy exchanged at the condenser and the electric energy absorbed by the compressor) and the efficiency of the European electricity production system (the so-called CC, previously defined; as already stated, this value is now considered 2.5) increased by 15% for taking into account the electric consumption of the other components of the heat pump; and first of all of the fan, used for propelling the air through the evaporator 61.

The efficiency of current condensing boilers exceeds at least 90%, in case they are installed in low temperature systems (typically so-called "floor" systems) and exceeds at least 85% in high temperature systems (typically so-called "radiator" systems).

The efficiency of the heat pump is higher than the one of the condensing boiler when, under the most unfavourable conditions, it has a COP value of at least 2.45 with high temperature systems and of 2.60 with low temperature systems.

By way of example, reference will now be made to a heating system with an average temperature of 70°C.

By operating at this average temperature, the efficiency of the condensing boiler is 85%.

For the sake of convenience, the heat pump must operate under these conditions with a COP of 2.5 x 1.15 x 0.85 = 2.44. It is also well known that the efficiency (COP) and the performance of traditional air/water heat pumps are strongly influenced by the temperature difference existing between the cold source available to evaporator 61 (namely outside air) and the water coming from duct 31 passing through condenser 62.

It is also well known that for ambient air temperatures higher than 5°C the COP values of the heat pump are constantly above the aforesaid values of convenience, and that, therefore, the heat pump is convenient if compared with the condensing boiler.

When, on the contrary, the ambient air temperature decreases below 5°C, frost and ice are formed on the evaporator caused by the freezing of the moisture contained in the air when it contacts the cold walls of the evaporator 61 crossed by the refrigerant gas at temperatures lower than or equal to 0°C.

The heat pumps are then compelled to carry out onerous defrost cycles, which heavily affect in a negative sense the efficiency of the machine (around 30%), thus decreasing it below the aforesaid values of convenience of 85% and 90%.

Since statistically, for the most part of the winter period, in central and southern European regions the outside temperatures are higher than or equal to 5°C, thus allowing an efficiency higher than 90%, the apparatus works with a "heat pump" priority mode operation.

First it will be examined the case wherein the outside air temperature is higher than or equal to 5°C.

When the apparatus 100 is switched on, for instance in the morning, it occurs as follows:
- the pump (PP) is put into operation;
- the temperature probe (ST1) measures a temperature value lower than the one set by the user on the control panel 45;
- the electronic control unit 40 starts compressor (CMP) and fan 80;
- the fan 80 draws air from the outside through the air inlet duct 27;
- the heat taken from the ambient air by means of the evaporator 61 is transferred to the refrigerant fluid, thus allowing its evaporation;
- the compressor (CMP) increases pressure and temperature of the refrigerant fluid which is then fed to the condenser 62, where it exchanges heat with the water coming from the system through duct 31, and condenses;
- then the refrigerant fluid passes through the (adiabatic) lamination valve 65, lowering its pressure and temperature, and continues its thermodynamic cycle as previously described; it should be incidentally noticed that the lamination valve 65 is operated by the electronic control unit 40 in order to maintain a temperature difference measured by the probes (ST3) and (ST2) at a value of some degrees Celsius which is sufficient to transfer some heat between the compressed refrigerant fluid coming from the compressor (CMP) and the water returning from the system through duct 31; and
- once that the heat pump 50 has reached the steady operation condition (condition determined by the size of compressor (CMP)), after a few minutes, if the delivery temperature read by the probe (ST1) is lower than the value set by the user, the electronic control unit 40 activates the previously described ignition cycle of the condensing boiler 20.

At this point, the condensing boiler 20 operates (according to the previously described cycle) by adding the energy share requested by the system and not made available by the heat pump 50.

It is clear that, if the size of the compressor is not limited by the available electric energy, the boiler never needs to operate.

Now it will be examined the case wherein the outside air temperature is lower than or equal to 5°C.

As previously stated, at these outside air temperatures the heat pumps remarkably reduce their efficiency, decreasing it to values lower than those obtainable by using the sole condensing boiler.

This is caused by the increased change of temperature (and therefore also of pressure) between evaporation and condensation of the refrigerant fluid and, above all (as previously stated), by the need of introducing evaporator defrost cycles in order to get rid of the ice formed on the evaporator by the frozen air moisture.

In order to avoid these drawbacks, the apparatus 100 object of the present invention works by synchronously operating the heat pump 50 and the condensing boiler 20 to a sufficient degree to ensure that the exhaust gases coming from the primary heat exchanger 25, by exchanging heat with outside air through the exchanger 67, or by exchanging heat directly with the refrigerant fluid through the exchanger 68, increase the evaporation temperature inside the evaporator 61, and in the case of figures 5 and 6, inside the evaporator 68, to values higher than 0°C.

In this second case, when the apparatus 100 is switched on, for instance in the morning, it occurs as follows:
- the pump (PP) is put into operation;
- the temperature probe (ST1) measures a temperature value lower than the one set by the user on the control panel 45;
- the electronic control unit 40 starts the compressor (CMP) and the fan 80;
- the temperature probe (ST4) detects temperature values lower than 5°C and, therefore, the electronic control unit 40 starts the condensing boiler 20 in order to provide a sufficient amount of energy to increase the air temperature entering the evaporator 61 above 5°C;
- once that the heat pump 50 has reached the steady operation condition, determined by the size of compressor (CMP), after a few minutes, if the water temperature read by the probe (ST2) is lower than the value set by the user, the electronic control unit 40 compels the condensing boiler 20 to give more power; and
- at this point the heat pump 50 and the condensing boiler 20 work synchronously (according to the aforesaid cycles) with a heat pump 50 priority mode operation, while the boiler 20 is activated to avoid a possible evaporation below 5°C and, if necessary, also to balance a possible inadequacy of the heat pump 50 to provide the amount of power requested by the heating system.

The condensing boiler 20 contributes in two ways to raise the total efficiency of the apparatus 100:
a) by providing thermal energy, which would otherwise be dispersed in the air, directly to the evaporator 61 by means of the exchanger 67 and, in the case of figures 5 and 6, directly to the complementary evaporator 68;
b) by increasing the COP, and therefore also the efficiency of the heat pump 50, thanks to an increase of the average evaporation temperature; in fact, the combustion products coming from the primary heat exchanger 25 exchange heat with the outside ambient air by providing heat to the evaporator 61 of the heat pump 50, both in the form of sensible heat (since the exhaust gases leave the primary heat exchanger 25 at temperatures usually comprised between 40°C and 70°C, therefore higher than the outside air temperature), and in the form of latent heat, since the exhaust gases contain a certain amount of water vapour which by condensing releases heat to the evaporator 61.

The characteristics and advantages of the apparatus object of the present invention concern both manufacture and performances.

From the performance point of view, it is clear that the synchronous operation of the condensing boiler and of the heat pump allows a full recovery of the residual energy contained in the exhaust gases coming from the boiler and its reintroduction in the system thanks to the temperature increase produced by the heat pump.

From the moment when the condensing boiler 20 is started, it makes available a certain amount of combustion products (exhaust gases), having an energy content in the form of sensible and latent heat, which can no longer be transferred to the system water because of their insufficient temperature, but which can be transferred to the refrigerant fluid by means of the exchanger 67 and of the evaporator 61, or by means of the complementary evaporator 68, and which can then be transferred to the system water by means of the condenser 66 thanks to the higher temperature obtained.

From the manufacture point of view, it is clear that the separation of air and exhaust gases allowed by the exchanger 67, or the direct exchange between exhaust gases and refrigerant fluid by means of the complementary evaporator 68, allow the use of a fume evacuation duct 82 in the flue pipe with the small size typical of condensing boilers; whereas the air inlet duct 27 and the air evacuation duct 81, which must have passage sections whose areas are at least five times larger than the previous ones, can be easily supported by a single external wall (WL1) of the building.

This remarkably simplifies and eases the installation in the ever more frequent cases where it is forbidden to download the exhaust gases from the external walls of the buildings and where, therefore, the manufacture costs of the flue pipe are remarkably reduced since exhaust gases can be downloaded through small ducts.

Moreover, it must be noticed that the manufacture of a single-piece apparatus 100 wherein both devices, namely condensing boiler 20 and heat pump 50, are integrated inside the same housing with a single hydraulic circuit 30, and wherein all functional, regulation and control devices of the apparatus 100 are present, facilitates both the assembly to the installer and the adjustment to the user.

It is clear that the lower the temperature of the outside air, the smaller the amount of air directly taken from the outside and warmed by the exchanger 67, in order to avoid a decrease of the pre-heated air temperature below 5°C (critical threshold below which, as already stated, defrost cycles must be carried out), thus progressively reducing the efficiency advantage of the apparatus if compared with the single condensing boiler, yet never completely cancelling it.

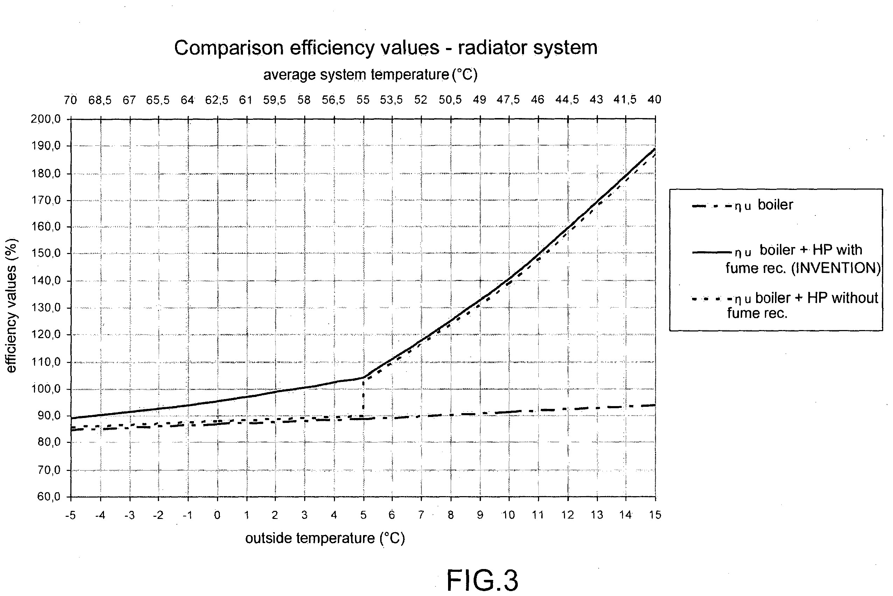

Figure 3 represents, in the form of curves, the efficiency trend of various systems according to the outside air temperature in the case of a radiator heating system (high temperature systems). The total power of the apparatus 100 is 6 kW, value which can be considered the average power installed in a normal flat.

In particular:
- the dash-and-dot curve represents the efficiency trend according to the outside air temperatures in the case of a simple condensing boiler;
- the dashed curve represents the solution, known in the art, of an apparatus comprising a condensing boiler and a heat pump in which, however, the energy contained in the exhaust gases is not recovered to the advantage of the heat pump; and
- the continuous curve represents the solution object of the present invention; namely when the heating apparatus comprises a condensing boiler and a heat pump in which the energy contained in the exhaust gases coming out of the heat exchanger of the boiler is recovered to the advantage of the air entering the evaporator of the heat pump, or directly to the advantage of the refrigerant fluid of the heat pump.

Please remark that:
- with outside temperatures higher than 5°C, when only the heat pump works, the efficiency values exceed, even by far, those of the condensing boiler and coincide in both aforesaid solutions;
- with outside temperatures lower than 5°C, in traditional systems, the heat pump is deactivated whereas only the condensing boiler is activated; and therefore the efficiency values coincide with those of the condensing boiler; whereas, in the solution object of the present invention, the recovery of the heat from the exhaust gases allows to obtain an efficiency increase comprised between a minimum of 4 points (with an outside temperature of -5°C) and a maximum of 15 points (with an outside temperature slightly lower than 5°C).

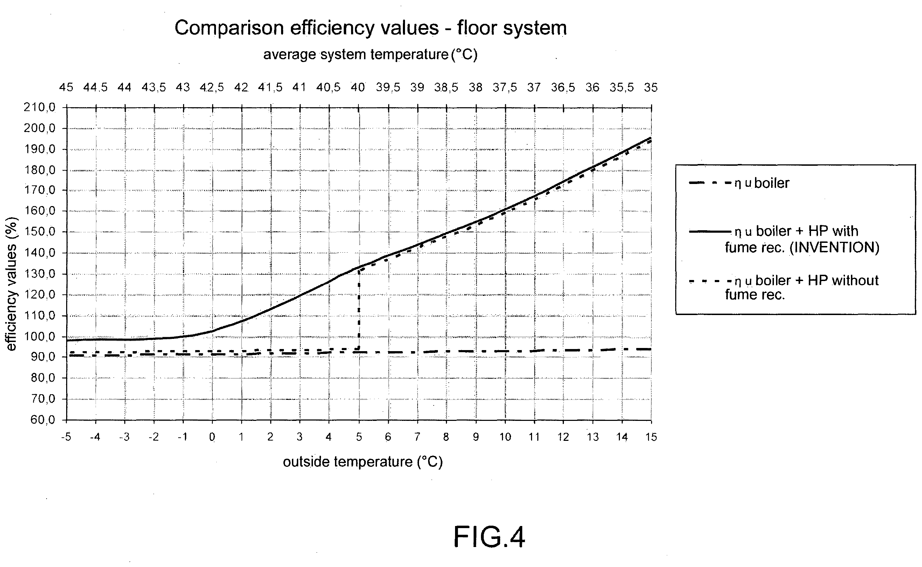

Figure 4 represents in the form of curves the efficiency trend of the various systems according to the outside air temperature in the case of a floor heating system (low temperature systems). Also in this case, the total power of the apparatus 100 is 6 kW.

The three curves of figure 4 are indicated as those in figure 3.

By observing figure 4 it is clear that:
- with outside temperature values higher than 5°C, when only the heat pump works, the efficiency values exceed even by far those of the condensing boiler and coincide in both solutions;
- with outside temperature values lower than 5°C, in traditional systems (dashed curve) the heat pump is deactivated whereas only the condensing boiler is activated (dash-and-dot curve); and therefore the efficiency values coincide with those of the condensing boiler; whereas, in the solution object of the present invention (continuous curve), the recovery of the heat from the exhaust gases allows to obtain an efficiency increase larger than the one observed in high temperature systems (figure 3) and comprised between a minimum of 7 points and a maximum of 41 points with outside temperature values slightly lower than 5°C.

It has been experimentally found that analogous results are obtained by taking into account power values different from 6.0 kW and variable in a range comprised between 2.0 and 9.0 kW; values compatible with those requested in the winter season for a middle-sized living unit.

Finally, it has been found that, taking into account the following statistical values:
- temperature of the outside ambient air;
- temperature of the heating systems; and
- power used for meeting central and southern Europe heating needs
yearly efficiency increases are obtained (and therefore lower consumptions of primary energy obtained from fossil fuels) in the order of 8% in the case of radiator heating systems, namely high temperature systems, and of 10% in the case of floor heating systems, namely low temperature systems.

The main advantage of the present invention is that the present apparatus is made in a single piece obtained by a complete integration of a condensing boiler and of an air/water heat pump, with a single ambient air inlet duct which can be directly connected to an outer wall of the building, an air evacuation duct which, in turn, can be directly connected to an outer wall, and a fume evacuation duct, having the small size typical of condensing boilers and connectable to the flue pipe, which can obtain efficiency values higher than those obtainable by diachronically or synchronically using both devices (present state of the art), and that it is installer and user friendly.

## Claims

1. Heating apparatus (100) comprising a condensing boiler (20), a heat pump (50), and a primary circuit (30), with the water of the primary circuit (30) passing through the condenser (62) of said heat pump (50) and successively warmed, moreover, by the combustion products generated in said condensing boiler (20) ;
**wherein** it comprises some devices in which the following heat exchanges occur:
- a first heat exchange in heat exchange means (68) between the exhaust gases coming from the condensing boiler (20), on the one side, and the refrigerant fluid of the heat pump (50), on the other side; and
- a second heat exchange, at higher temperature and inside the condenser (62), between said refrigerant fluid, on the one side, and the water flowing in the primary circuit (30), on the other side, in order to increase the temperature of the water flowing in the primary circuit (30) ;
**wherein** said first heat exchange is a direct heat exchange between the exhaust gases and the refrigerant fluid, and said first heat exchange occurs in heat exchange means (68) belonging to said first heat pump (50);
wherein there is also a third heat exchange in correspondence with evaporation means (61) of said heat pump (50), between the air coming from the outside through a single ambient air inlet duct (27), on the one hand, and the refrigerant fluid of the heat pump (50), on the other hand;
wherein the condensing boiler (20) and the heat pump (50) are contained inside a single-piece housing (INV) which substantially comprises all functional elements of said apparatus (100); and
the apparatus (100) comprises said single ambient air inlet duct (27), a single evacuation duct (81) of the air left in the only housing (INV),
the apparatus (100) being **characterized in that** it comprises
an evacuation duct (82) of the exhaust gases coming from the boiler separated from said single ambient air inlet duct (27) and from said single evacuation duct (81) ; and **in that** said evacuation duct (82) has a section whose surface is at least five times smaller than the section of the single ambient air inlet duct (27) and than the section of the single evacuation duct (81) of the air left in the only housing (INV).

2. Apparatus (100), according to Claim 1, **characterized in that** said third heat exchange occurs upstream of said first heat exchange.

3. Apparatus (100), according to Claim 1, **characterized in that** said third heat exchange occurs downstream of said first heat exchange.

4. Apparatus (100), according to Claim 3, **characterized in that** said first heat exchange occurs between the exhaust gases coming from the condensing boiler (20) and the refrigerant fluid coming from the lamination valve (65) of the heat pump (50).

5. Apparatus (100), according to any of the preceding Claims, **characterized in that** it comprises means (23), (25), (80), (ST4), (40) for maintaining the temperature of the air entering the evaporator (61) at values higher than 5°C in order to avoid the freezing of the moisture it contains.

## Patentansprüche

1. Heizvorrichtung (100) mit einem Brennwertkessel (20), einer Wärmepumpe (50) und einem Primärkreis (30), wobei das Wasser des Primärkreises (30) durch den Kondensator (62) der Wärmepumpe (50) strömt und nachfolgend außerdem durch die im Brennwertkessel (20) erzeugten Verbrennungsprodukte erwärmt wird,
wobei die Vorrichtung einige Einrichtungen aufweist, in denen die folgenden Wärmeübertragungsprozesse stattfinden:
- eine erste Wärmeübertragung in einer Wärmeübertragungseinrichtung (68) zwischen den von dem Brennwertkessel (20) strömenden Abgasen (20), auf der einen Seite, und dem Kältemittelfluid der Wärmepumpe (50), auf der anderen Seite; und
- eine zweite Wärmeübertragung, bei höherer Temperatur und innerhalb des Kondensators (62), zwischen dem Kältemittelfluid, auf der einen Seite, und dem im Primärkreis (30) strömenden Wasser, auf der anderen Seite, um die Temperatur des im Primärkreis (30) strömenden Wassers zu erhöhen;
wobei die erste Wärmeübertragung eine direkte Wärmeübertragung zwischen den Abgasen und dem Kältemittelfluid ist und die erste Wärmeübertragung in einer Wärmeübertragungseinrichtung (68) stattfindet, die der ersten Wärmepumpe (50) zugehörig ist,
wobei auch eine dritte Wärmeübertragung gemäß einer Verdampfungseinrichtung (61) der Wärmepumpe (50) zwischen der Luft, die von außerhalb über einen einzelnen Umgebungslufteinlasskanal (27) strömt, auf der einen Seite, und dem Kältemittelfluid der Wärmepumpe (50), auf der anderen Seite, stattfindet,
wobei der Brennwertkessel (20) und die Wärmepumpe (50) innerhalb eines einteiligen Gehäuses (INV) enthalten sind, das im Wesentlichen alle Funktionselemente der Vorrichtung (100) aufweist, und
die Vorrichtung (100) den einzelnen Umgebungslufteinlasskanal (27) und einen einzelnen Evakuierungskanal (81) für die Luft, die in dem einzigen Gehäuse (INV) der Vorrichtung (100) verbleibt, aufweist,
wobei die Vorrichtung (100) **dadurch gekennzeichnet ist, dass** sie einen Evakuierungskanal (82) für die vom Brennwertkessel strömenden Abgase, der von dem einzelnen Umgebungslufteinlasskanal (27) und von dem einzelnen Evakuierungskanal (81) getrennt ist, aufweist; und
dadurch, dass der Evakuierungskanal (82) einen Querschnitt aufweist, dessen Fläche mindestens fünfmal kleiner ist als der Querschnitt des einzelnen Umgebungslufteinlasskanals (27) und als der Querschnitt des einzelnen Evakuierungskanals (81) für die Luft, die in dem einzigen Gehäuse (INV) verbleibt.

2. Vorrichtung (100) nach Anspruch 1, **dadurch gekennzeichnet, dass** die dritte Wärmeübertragung stromauf von der ersten Wärmeübertragung stattfindet.

3. Vorrichtung (100) nach Anspruch 1, **dadurch gekennzeichnet, dass** die dritte Wärmeübertragung stromab von der ersten Wärmeübertragung stattfindet.

4. Vorrichtung (100) nach Anspruch 3, **dadurch gekennzeichnet, dass** die erste Wärmeübertragung zwischen den vom Brennwertkessel (20) strömenden Abgasen und dem vom Laminierungsventil (65) der Wärmepumpe (50) strömenden Kältemittelfluid stattfindet.

5. Vorrichtung (100) nach einem der vorhergehenden Ansprüche, **dadurch gekennzeichnet, dass** sie Einrichtungen (23), (25), (80), (ST4), (40) zum Aufrechterhalten der Temperatur der in die Verdampfungseinrichtung (61) eintretenden Luft bei Werten über 5°C aufweist, um ein Gefrieren der darin enthaltenen Feuchtigkeit zu vermeiden.

## Revendications

1. Appareil de chauffage (100) comprenant une chaudière à condensation (20), une pompe à chaleur (50), et un circuit primaire (30), avec l'eau du circuit primaire (30) passant à travers le condenseur (62) de ladite pompe à chaleur (50) et chauffée consécutivement, de plus, par les produits de combustion générés dans ladite chaudière à condensation (20) ; dans lequel il comprend quelques dispositifs dans lesquels ont lieu les échanges de chaleur suivants :
- un premier échange de chaleur dans des moyens d'échange de chaleur (68) entre les gaz d'échappement provenant de la chaudière à condensation (20), d'une part, et le fluide frigorigène de la pompe à chaleur (50), d'autre part ; et
- un deuxième échange de chaleur, à une température supérieure et à l'intérieur du condenseur (62), entre ledit fluide frigorigène, d'une part, et l'eau s'écoulant dans le circuit primaire (30), d'autre part, afin d'augmenter la température de l'eau s'écoulant dans le circuit primaire (30) ;
dans lequel ledit premier échange de chaleur est un échange de chaleur direct entre les gaz d'échappement et le fluide frigorigène, et ledit premier échange de chaleur a lieu dans des moyens d'échange de chaleur (68) faisant partie de ladite première pompe à chaleur (50) ;
dans lequel il y a aussi un troisième échange de chaleur correspondant aux moyens d'évaporation (61) de ladite pompe à chaleur (50), entre l'air venant de l'extérieur au travers d'un simple conduit d'admission d'air ambiant (27), d'une part, et le fluide frigorigène de la pompe à chaleur (50), d'autre part ; dans lequel la chaudière à condensation (20) et la pompe à chaleur (50) sont contenues à l'intérieur d'un carter monobloc (INV) qui comprend essentiellement tous les éléments fonctionnels dudit appareil (100) ; et l'appareil (100) comprend ledit unique conduit d'admission d'air ambiant (27), un unique conduit d'évacuation (81) de l'air laissé dans l'unique carter (INV),
l'appareil (100) étant **caractérisé en ce qu'**il comprend un conduit d'évacuation (82) des gaz d'échappement provenant de la chaudière distinct dudit unique conduit d'admission d'air ambiant (27) et dudit unique conduit d'évacuation (81) ; et **en ce que** ledit conduit d'évacuation (82) a une section dont la surface est au moins cinq fois plus petite que la section de l'unique conduit d'admission d'air ambiant (27) et que la section de l'unique conduit d'évacuation (81) de l'air laissé dans l'unique carter (INV).

2. Appareil (100), selon la revendication 1, **caractérisé en ce que** ledit troisième échange de chaleur a lieu en amont dudit premier échange de chaleur.

3. Appareil (100), selon la revendication 1, **caractérisé en ce que** ledit troisième échange de chaleur a lieu en aval dudit premier échange de chaleur.

4. Appareil (100), selon la revendication 3, **caractérisé en ce que** ledit premier échange de chaleur a lieu entre les gaz d'échappement provenant de la chaudière à condensation (20) et le fluide frigorigène provenant de la vanne de laminage (65) de la pompe à chaleur (50).

5. Appareil (100), selon l'une quelconque des revendications précédentes, **caractérisé en ce qu'**il comprend des moyens (23), (25), (80), (ST4), (40) pour maintenir la température de l'air pénétrant dans l'évaporateur (61) à des valeurs supérieures à 5°C afin d'éviter la congélation de l'humidité qu'il contient.
